# DEMANDE DE BREVET EUROPEEN

(11) **EP 3 572 168 A1**
(43) Date de publication de la demande: **27.11.2019**
(21) Numéro de dépôt: 19175472.0
(22) Date de dépôt: 20.05.2019
(51) Int. Cl.: B22F 3/105, F23R 3/28, B33Y 80/00, B33Y 10/00, B22F 5/10, B29C 64/40

(54) **PIECE INTERMEDIAIRE OBTENUE PAR FABRICATION ADDITIVE, ENSEMBLE COMPRENANT LA PIECE INTERMEDIAIRE ET PROCEDE DE FABRICATION D'UNE PIECE**

(30) Priorité: 21.05.2018 FR 1854206
(71) Demandeur: ArianeGroup SAS, 75015 Paris (FR); Volum-E, 76340 Blangy-sur-Bresle (FR)
(72) Inventeur: LAMELAS, German, 76000 ROUEN (FR); DELAHAYE, Olivier, 76350 OISSEL (FR); GUICHARD, Didier, 27120 MENILLES (FR); MICHEL, Hervé, 76340 RIEUX (FR); BARRET, Clément, 76370 SAINT-MARTIN EN CAMPAGNE (FR)
(74) Mandataire: Cabinet Beau de Loménie

(57) **Abrégé**

L'invention concerne une pièce intermédiaire (10) obtenue par un procédé de fabrication additive sur lit de poudre, comprenant une pièce (12) comportant au moins une cavité interne et un système de supportage de la pièce (12) comportant au moins une cavité interne, la pièce intermédiaire (10) comprenant au moins un circuit de circulation d'un gaz sec, le circuit de circulation du gaz sec étant configuré pour permettre la circulation du gaz sec entre le système de supportage de la pièce et un orifice débouchant sur une surface extérieure de la pièce (12) en passant par la cavité interne de la pièce (12) et la cavité interne du système de supportage.

L'invention concerne également un ensemble comprenant la pièce intermédiaire et son procédé de fabrication.

## Description

### Domaine technologique

Le présent exposé concerne des pièces obtenues par un procédé de fabrication additive sur lit de poudre, en particulier, des pièces complexes comprenant des cavités internes.

### Arrière-plan technologique

On entend des pièces complexes, voire très complexes, des pièces qui présentent une architecture compliquée et qui, si elles étaient produites par un autre procédé qu'un procédé de fabrication additive sur lit de poudre, nécessiterait l'assemblage d'un grand nombre de pièces, telles que par exemple des têtes d'injection de chambres de combustion ou de générateur de gaz de moteur de fusée.

Pour des pièces de ce type, la fabrication additive sur lit de poudre, aussi appelée « LBM », conformément au sigle anglais pour « Laser Beam Melting », ou « SLM » conformément au sigle anglais pour « Selective Laser Melting » est un procédé au cours duquel, une pièce tridimensionnelle est réalisée, couche après couche, par fusion au moins partielle localement d'une couche de poudre par un laser qui balaye la couche de poudre aux endroits où l'on souhaite faire fondre la poudre. Lorsqu'une couche a été balayée par le laser, une nouvelle couche de poudre est déposée sur la couche qui vient d'être balayée et la nouvelle couche est balayée par le laser. La pièce est ainsi construite couche après couche. Ce procédé permet un gain en termes de coûts, de délais de fabrication et/ou permet de réaliser des pièces complexes qu'il n'était pas possible ou très difficile de réaliser d'un seul tenant par d'autres procédés, tout en garantissant des propriétés mécaniques proches de celles obtenues avec les procédés traditionnels, tels que le forgeage ou la fonderie.

En effet, la fabrication additive sur lit de poudre permet de s'affranchir de la nécessité de fabriquer des moules et/ou de souder et/ou d'assembler différents éléments pour former la pièce désirée. Il est donc plus simple de passer de l'étape de conception à l'étape de production de la pièce. Cela permet également de réduire les coûts liés à la fabrication des moules et/ou aux outillages spécifiques et/ou à l'assemblage des différents éléments.

Cependant, la poudre utilisée est une poudre fine présentant généralement un diamètre de particules de poudre inférieur à 100 µm. La poudre peut se trouver dans des cavités internes de la pièce. On parle alors de poudre résiduelle. La poudre résiduelle peut également se trouver dans un système de supportage de la pièce réalisée par fabrication additive sur lit de poudre. Le système de supportage est un système qui peut être présent entre un plateau de construction de la pièce et la pièce, et/ou dans des régions de la pièce finie qui sont généralement vides, c'est-à-dire sans matière. Ce système de supportage est généralement très cloisonné ou plein, afin de supporter efficacement la pièce en cours de fabrication, de sorte que l'élimination de la poudre résiduelle peut y être difficile.

Lorsque le système de supportage est très cloisonné, par exemple de manière similaire à une structure en nid d'abeille, le système de supportage peut être fragile et se casser pendant la fabrication de la pièce. Ce système de supportage est toutefois relativement facile à retirer par usinage. Le système de supportage étant très cloisonné, on comprend que l'élimination de la poudre résiduelle ne peut être réalisée qu'après retrait du système de supportage.

Lorsque le système de supportage est plein, le risque de rupture du système de supportage est réduit, voire éliminé, du fait de la rigidité du système de supportage obtenu. En contrepartie, le retrait du système de supportage est généralement complexe et coûteux. Le système de supportage étant plein, on comprend que l'élimination de la poudre résiduelle ne peut être réalisée qu'après retrait du système de supportage.

La poudre résiduelle doit généralement être éliminée et cela peut s'avérer complexe en particulier lorsque la taille des cavités et/ou des orifices débouchant dans ces cavités sont de faible diamètre, par exemple inférieure à 1 mm (millimètre). Par exemple, dans des applications telles que des têtes d'injection de chambres de combustion ou de générateur de gaz de moteur de fusée, la poudre résiduelle peut générer des mauvais fonctionnements de la tête d'injection par obstruction partielle ou totale des circuits fluides, et pouvant aller jusqu'à la fusion locale du matériau, voire à des dégradations importantes pouvant conduire à l'apparition de flammes, par exemple lors d'un contact de la poudre résiduelle avec de l'oxygène liquide.

Il existe donc un besoin de moyens permettant d'éliminer la poudre résiduelle de manière efficace après un procédé de fabrication additive sur lit de poudre.

### Présentation

Le présent exposé vise à remédier au moins en partie à ces inconvénients.

A cet effet, le présent exposé concerne une pièce intermédiaire obtenue par un procédé de fabrication additive sur lit de poudre, comprenant une pièce comportant au moins une cavité interne et un système de supportage de la pièce comportant au moins une cavité interne, la pièce intermédiaire comprenant au moins un circuit de circulation d'un gaz sec, le circuit de circulation du gaz sec étant configuré pour permettre la circulation du gaz sec entre le système de supportage de la pièce et un orifice débouchant sur une surface extérieure de la pièce en passant par la cavité interne de la pièce et la cavité interne du système de supportage.

On entend par gaz sec un gaz inerte dont l'humidité relative est inférieure ou égale à 1,0%, de préférence inférieure ou égale à 0,1% à 23°C (degré Celcius).

En effet, l'humidité pourrait entraîner l'agglomération de la poudre résiduelle et ainsi rendre son élimination plus difficile, voire impossible.

Grâce à la réalisation de la pièce intermédiaire par fabrication additive, la fabrication de la pièce est simplifiée. En effet, pour fabriquer des pièces complexes comprenant des cavités internes, il est souvent nécessaire de souder un grand nombre d'éléments entre eux et ce, avec une grande précision. La pièce intermédiaire étant réalisée par fabrication additive, la pièce est réalisée d'un seul tenant.

Grâce à la présence du circuit de circulation qui permet la circulation de gaz sec entre le système de supportage de la pièce et un orifice débouchant sur une surface extérieure de la pièce en passant par la cavité interne de la pièce et la cavité interne du système de supportage, il est possible d'éliminer efficacement la poudre résiduelle à l'intérieur de la cavité interne. Le circuit de circulation étant réalisé par fabrication additive sur lit de poudre pendant la fabrication du système de supportage de la pièce, on peut positionner précisément le circuit de circulation de sorte que l'efficacité de l'élimination de la poudre résiduelle par le gaz sec est optimisée. En effet, le circuit de circulation est directement aligné avec les cavités internes de la pièce.

Par ailleurs, il n'est pas nécessaire de prévoir des orifices dans la plaque de construction sur laquelle la pièce intermédiaire est construire afin de pouvoir éliminer la poudre résiduelle au travers de ces orifices. Il n'est donc pas nécessaire de positionner avec précision la pièce intermédiaire sur la plaque de construction puisqu'il n'est pas nécessaire d'aligner les cavités internes avec des orifices de la plaque de construction.

En outre, le circuit de circulation de gaz sec étant réalisé au cours du procédé de fabrication de la pièce intermédiaire, il est possible d'éliminer la poudre résiduelle avant de séparer la pièce intermédiaire et la plaque de construction sur laquelle la pièce intermédiaire est fabriquée.

La séparation de la pièce intermédiaire et de la plaque de construction est généralement réalisée par un procédé qui génère de la chaleur et qui est réalisé en milieu liquide. Ainsi, lorsque la séparation est réalisée avant d'avoir pu éliminer la poudre résiduelle, le milieu liquide mouille tout ou partie de la poudre résiduelle qui s'agglomère et qui ne s'écoule plus.

Par ailleurs, le procédé entraine la fusion de tout ou partie de la poudre résiduelle dans la zone de séparation de la pièce intermédiaire et de la plaque de construction, notamment la poudre résiduelle présente dans le système de supportage qui présente un grand nombre de cloisons. Ces cloisons rendent l'élimination de la poudre résiduelle compliquée. La séparation se fait par exemple par électroérosion par fil, l'électroérosion est aussi appelée « EDM », conformément au sigle anglais pour « Electrical Discharge Machining ». L'électroérosion est généralement réalisée en milieu liquide, tel que de l'eau ou un dérivé du pétrole.

Il est donc possible d'éliminer toute la poudre résiduelle présente dans la cavité interne et dans le système de supportage avant l'étape de séparation de la pièce intermédiaire et de la plaque de construction. On évite ainsi de faire fondre des particules de poudre résiduelle lors de la séparation de la pièce intermédiaire et de la plaque de construction et/ou de fermer partiellement des orifices d'entrée ou de sortie du circuit de circulation du gaz sec lors de l'étape de séparation de la pièce intermédiaire et de la plaque de construction.

On comprend donc que l'élimination de la poudre résiduelle est réalisée avant la séparation de la pièce intermédiaire et de la plaque de construction.

La pièce intermédiaire est ensuite séparée : la pièce est séparée du système de supportage. Lors de cette étape également la présence de poudre résiduelle peut être une source de mauvais fonctionnement de la pièce. En effet, la poudre résiduelle peut être au moins partiellement fondue et/ou s'être déplacée dans la cavité interne. La poudre résiduelle peut ainsi former des irrégularités de surface dans la cavité interne et/ou former des agglomérats de poudre fondue qui, lors de l'utilisation de la pièce pourraient être libérés et interagir de façon néfaste avec les fluides s'écoulant dans la cavité interne.

La pièce peut être ensuite traitée thermiquement. Lors de cette étape, la présence de poudre résiduelle dans la cavité interne peut être une source de mauvais fonctionnement de la pièce pour les mêmes raisons que celles citées précédemment. De plus, pendant le traitement thermique, cette poudre résiduelle peut être frittée dans les cavités internes de la pièce et ne peut ensuite plus être éliminée.

La température et la durée de traitement thermique permettent de réduire les contraintes mécaniques créées lors du procédé de fabrication additive sur lit de poudre, aussi appelées contraintes résiduelles. L'étape de traitement thermique, qui peut dépendre du matériau utilisé peut par exemple être réalisée à une température comprise entre 700°C et 1200°C et pendant un temps compris entre 15 minutes et 3 heures. A titre d'exemple non limitatif, le traitement thermique peut être réalisé à environ 1000°C pendant 30 minutes.

On comprend que la cavité interne peut être une succession ou un ensemble de cavités internes communiquant entre elles, c'est-à-dire communiquant les unes avec les autres, de sorte que lorsque l'on injecte un gaz sec et/ou qu'on aspire un gaz sec, dans au moins l'une des cavités de la succession ou de l'ensemble de cavités, toutes les cavités de la succession ou de l'ensemble de cavités formant la cavité interne sont parcourues par le gaz sec.

Dans certains modes de réalisation, le gaz sec est de l'air comprimé, de l'argon ou de l'azote.

On comprend que le gaz sec utilisé pour éliminer la poudre résiduelle ne réagit pas avec la poudre résiduelle. Le gaz sec utilisé est donc un gaz inerte vis-à-vis de la poudre utilisée pendant la fabrication additive et donc vis-à-vis de la poudre résiduelle.

De manière connue, l'air comprimé est un air comprimé sec, c'est-à-dire exempt d'humidité et qui ne réagit pas avec la poudre résiduelle.

Dans certains modes de réalisation, la pièce comprend un premier ensemble de cavités communiquant entre elles et un deuxième ensemble de cavités communiquant entre elles, le système de supportage de la pièce comprenant une pluralité d'éléments de support, des éléments de support comprenant un premier conduit de circulation de gaz sec dans le premier ensemble de cavités et un deuxième conduit de circulation de gaz sec dans le deuxième ensemble de cavités.

Ainsi, lors de la fabrication additive sur lit de poudre d'une pièce comprenant plusieurs ensembles de cavités, les cavités d'un ensemble communiquant entre elles, il est possible de diriger le gaz sec dans chaque ensemble de cavités. On peut ainsi envisager que certains éléments de support ne comprennent qu'un seul conduit ou soient dépourvus de conduit.

Dans certains modes de réalisation, chaque élément de support comprend un premier conduit de circulation de gaz sec dans le premier ensemble de cavités et un deuxième conduit de circulation de gaz sec dans le deuxième ensemble de cavités.

Il est ainsi possible de réduire la pression gaz sec en augmentant les sections d'entrée de gaz sec dans les cavités de la pièce tout en obtenant une élimination efficace de la poudre résiduelle.

Dans certains modes de réalisation, le premier conduit de circulation de gaz sec et le deuxième conduit de circulation de gaz sec sont distincts.

Cela permet d'injecter le gaz sec séparément dans chaque ensemble de cavités et/ou de contrôler séparément l'injection du gaz sec dans chaque ensemble de cavités.

Dans certains modes de réalisation, le premier conduit de circulation gaz sec et le deuxième conduit de circulation de gaz sec sont concentriques.

Cela permet un encombrement réduit des premier et deuxième conduits de circulation de gaz sec. Le premier conduit peut être disposé à l'intérieur du deuxième conduit, ou inversement. Avantageusement, lorsque le premier conduit est disposé à l'intérieur du deuxième conduit, une paroi extérieure du premier conduit est également une paroi intérieure du deuxième conduit. On réduit ainsi le nombre de parois à réaliser par fabrication additive sur lit de poudre.

Le présent exposé concerne également un ensemble d'une pièce intermédiaire telle que définie précédemment, d'une plaque de construction et d'un injecteur de gaz sec configuré pour injecter un gaz sec dans la cavité interne.

Dans certains modes de réalisations, l'injecteur de gaz sec est configuré pour injecter le gaz sec dans le premier conduit de circulation de gaz sec et dans le deuxième conduit de circulation de gaz sec.

Dans certains modes de réalisation, l'injecteur de gaz sec peut prendre deux configurations, une première configuration dans laquelle le gaz sec circule dans le premier conduit de circulation de gaz sec et une deuxième configuration dans laquelle le gaz sec circule dans le deuxième conduit de circulation de gaz sec.

Le présent exposé concerne aussi un procédé de fabrication additive sur lit de poudre d'une pièce comprenant au moins une cavité interne, le procédé comprenant les étapes suivantes :
- fabrication additive sur lit de poudre d'une pièce intermédiaire sur une plaque de construction, la pièce intermédiaire comprenant une pièce comportant au moins une cavité interne et un système de supportage de la pièce comportant au moins une cavité interne, la pièce intermédiaire comprenant au moins un circuit de circulation d'un gaz sec ;
- circulation d'un gaz sec entre le système de supportage de la pièce et un orifice débouchant sur une surface extérieure de la pièce en passant par la cavité interne de la pièce et la cavité interne du système de supportage ;

- séparation de la pièce intermédiaire et de la plaque de construction ;
- séparation de la pièce et du système de supportage.

La circulation de gaz sec entre le système de supportage de la pièce et un orifice débouchant sur une surface extérieure de la pièce peut être réalisée par injection d'un gaz sec dans la pièce et/ou par aspiration d'un gaz sec dans la pièce.

Dans certains modes de réalisation, la circulation du gaz sec comprend une succession d'étapes d'aspiration et d'étapes d'injection du gaz sec.

Dans certains modes de réalisation, le procédé de fabrication additive sur lit de poudre comprend une étape de traitement thermique de la pièce.

La température et la durée de traitement thermique permettent de réduire les contraintes mécaniques créées lors du procédé de fabrication additive sur lit de poudre, aussi appelées contraintes résiduelles. On comprend que cette étape de traitement thermique de la pièce peut être réalisée alors que la pièce est encore solidaire du système de supportage (traitement thermique de la pièce intermédiaire), voire de la plaque de construction (traitement thermique de la pièce intermédiaire et de la plaque de construction).

Dans certains modes de réalisation, le procédé de fabrication additive sur lit de poudre peut également comprendre une étape de frittage de la pièce pour obtenir une pièce frittée qui peut ensuite être usinée.

La pièce peut être par exemple traitée par compression isostatique à chaud, appelée HIP conformément au sigle anglais pour « Hot Isostatic Pressing » qui consiste à mettre la pièce dans une enceinte sous pression, par exemple, à environ 1000 bar à environ 1000°C, en fonction du matériau.

Dans certains modes de réalisation, la pièce comprend un premier ensemble de cavités et un deuxième ensemble de cavités, le système de supportage de la pièce comprenant une pluralité d'éléments de support, des éléments de support comprenant un premier conduit de circulation de gaz sec dans le premier ensemble de cavités et un deuxième conduit de circulation de gaz sec dans le deuxième ensemble de cavités, le procédé comprenant une première étape de circulation de gaz sec dans le premier ensemble de cavités et une deuxième étape de circulation de gaz sec dans le deuxième ensemble de cavités.

Dans certains modes de réalisation, chaque élément de support comprend un premier conduit de circulation de gaz sec dans le premier ensemble de cavités et un deuxième conduit de circulation de gaz sec dans le deuxième ensemble de cavités.

Dans certains modes de réalisation, le premier conduit de circulation de gaz sec et le deuxième conduit de circulation de gaz sec sont distincts.

Dans certains modes de réalisation, le premier conduit de circulation gaz sec et le deuxième conduit de circulation de gaz sec sont concentriques.

Dans certains modes de réalisation, la première étape de circulation de gaz sec et la deuxième étape de circulation gaz sec sont réalisées l'une après l'autre.

Dans certains modes de réalisation, entre la première étape de circulation de gaz sec et la deuxième étape de circulation de gaz sec, un injecteur de gaz sec passe d'une première configuration dans laquelle le gaz sec est injecté dans le premier conduit de circulation de gaz sec à une deuxième configuration dans laquelle le gaz sec est injecté dans le deuxième conduit de circulation de gaz sec.

Dans certains modes de réalisation, la première étape de circulation de gaz sec et la deuxième étape de circulation de gaz sec sont réalisées simultanément.

### Brève description des dessins

D'autres caractéristiques et avantages de l'objet du présent exposé ressortiront de la description suivante de modes de réalisation, donnés à titre d'exemples non limitatifs, en référence aux figures annexées, sur lesquelles :
- la figure 1 est une vue schématique du dessus d'une pièce intermédiaire selon un premier mode de réalisation ;
- la figure 2 est une vue schématique du dessous de la pièce intermédiaire de la figure 1 ;
- la figure 3 est une vue schématique partielle agrandie de la figure 2 ;
- la figure 4 est une vue schématique en coupe d'un ensemble d'une pièce intermédiaire selon le plan IV-IV de la figure 1 et d'une plaque de construction ;
- la figure 5 est un agrandissement partiel V de la figure 4 ;
- la figure 6 est un agrandissement partiel VI de la figure 5 ;
- la figure 7 est une vue schématique en coupe d'un ensemble d'une pièce intermédiaire selon le plan VII-VII de la figure 1 et d'une plaque de construction ;
- la figure 8 est un agrandissement partiel VIII de la figure 7 ;
- la figure 9 est un agrandissement partiel IX de la figure 8 ;
- la figure 10 est un ordinogramme représentant les étapes d'un procédé de fabrication additive sur lit de poudre d'une pièce comprenant au moins une cavité interne ;
- la figure 11 une vue schématique en coupe similaire à la vue de la figure 4 d'une variante du premier mode de réalisation.

Sur l'ensemble des figures, les éléments en commun sont repérés par des références numériques identiques.

### Description détaillée

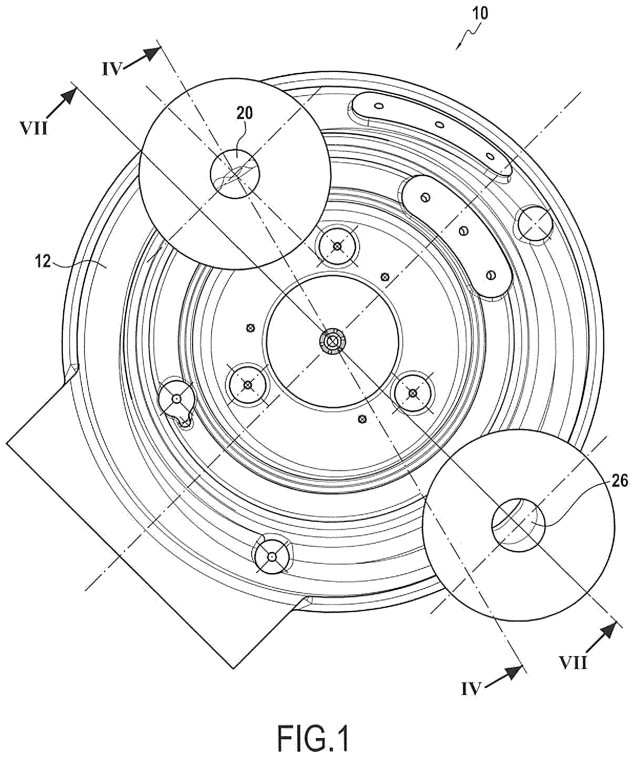

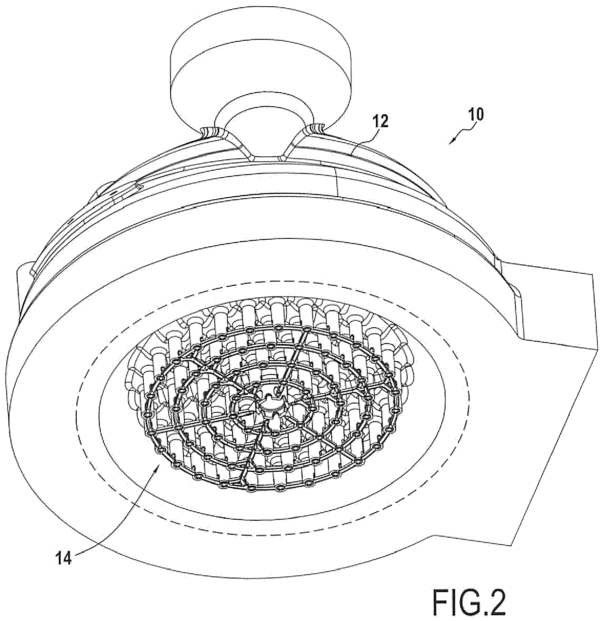

La figure 1 est une représentation schématique d'une pièce intermédiaire 10 selon un premier mode de réalisation. La figure 2 représente la pièce intermédiaire 10 en vue du dessous. La pièce intermédiaire 10 comprend une pièce 12 et un système de supportage 14 de la pièce 12.

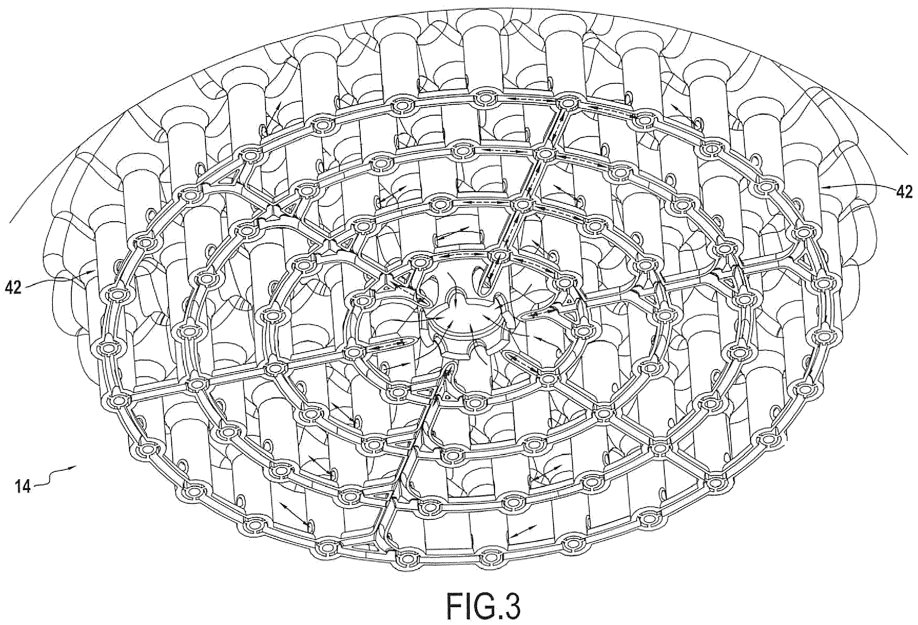

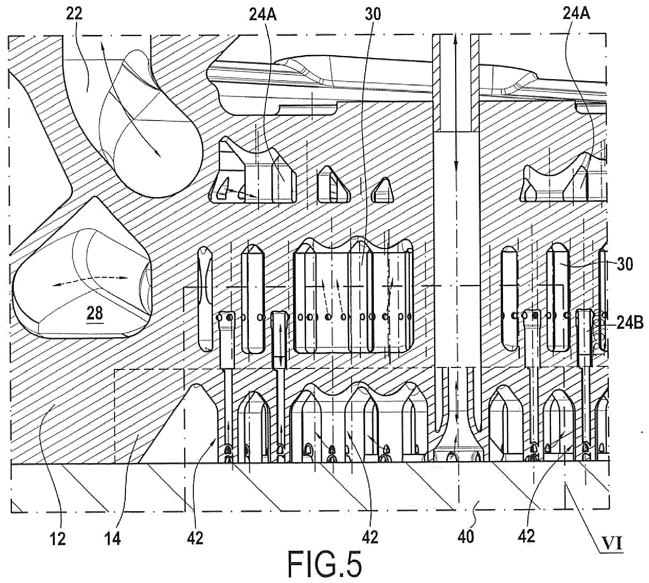

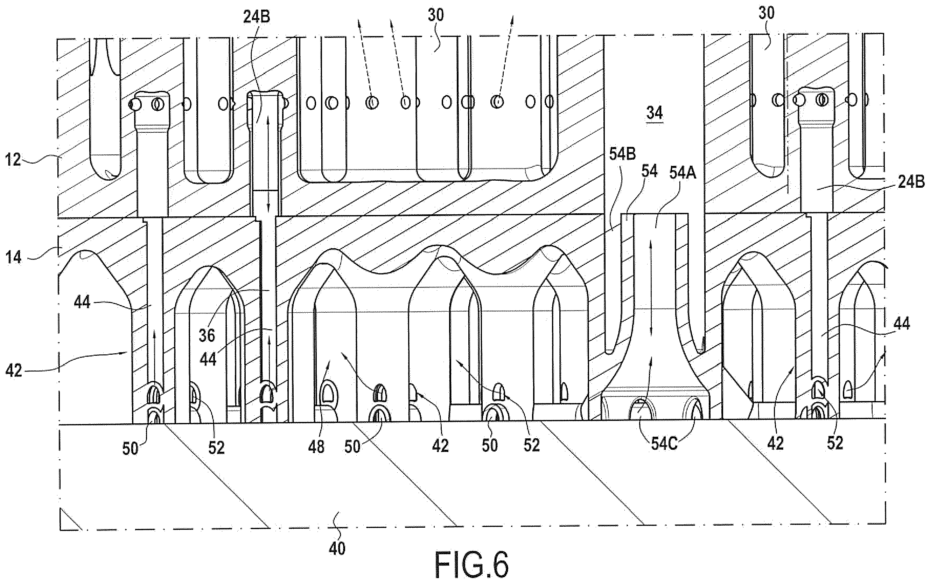

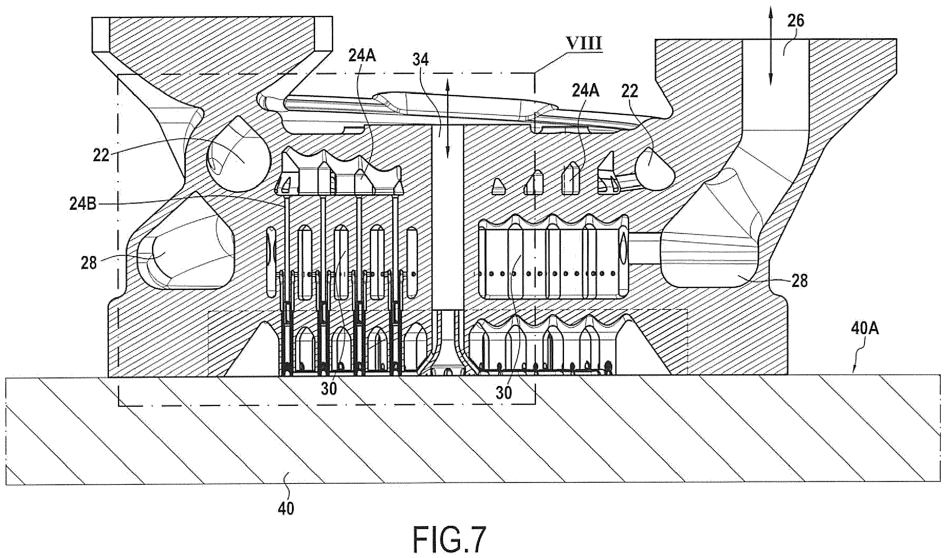

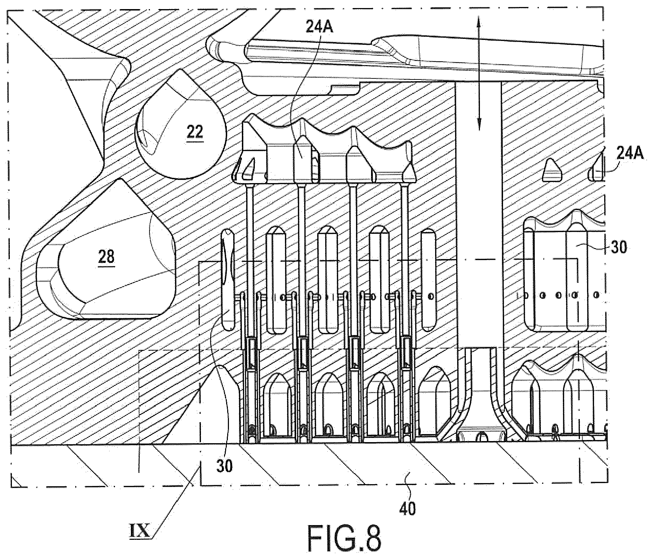

Dans le mode de réalisation des figures 1 à 10, la pièce 12 est une tête d'injection pour moteur de fusée.

Typiquement, la tête d'injection plate pour moteur de fusée comporte un circuit d'injection d'un comburant, par exemple de l'oxygène liquide, et un circuit d'injection d'un combustible, par exemple de l'hydrogène liquide. Ces circuits d'injection forment des cavités dans la tête d'injection.

Dans le mode de réalisation des figures 1 à 10, et de manière non limitative, la pièce 12 comporte un circuit d'injection d'oxygène comprenant une entrée d'oxygène 20 et un canal principal d'injection d'oxygène 22 débouchant dans au moins une première cavité interne 24A, 24B et un circuit d'injection d'hydrogène comprenant une entrée d'hydrogène 26 et un canal principal d'injection d'hydrogène 28 débouchant dans au moins une deuxième cavité interne 30. Ces canaux et cavités internes distribuent l'oxygène liquide et l'hydrogène liquide jusqu'à des injecteurs d'ergols liquides 32 qui injectent les deux ergols liquides dans une chambre de combustion.

Dans le mode de réalisation des figures 1 à 10, la pièce 12 comprend un canal central 34 de forme cylindrique. Ce canal central 34 peut par exemple recevoir un allumeur pyrotechnique de la tête d'injection. Comme autre exemple d'allumeur on peut également citer un allumeur torche basse pression ou haute pression, un allumeur acoustique, un allumeur à laser, un allumeur à bougie (appelé en anglais Direct Spark Igniters). Cette liste n'est pas exhaustive.

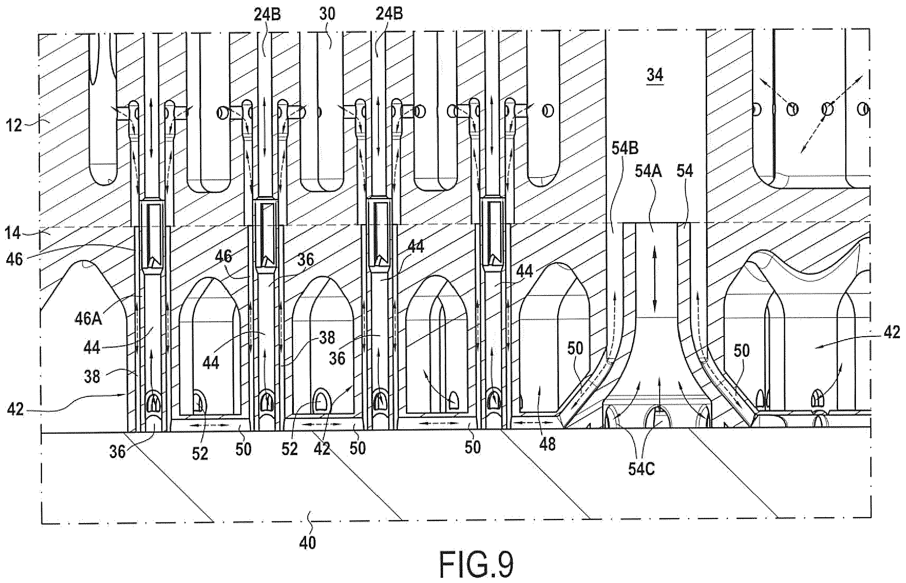

Dans le mode de réalisation des figures 1 à 10, le système de supportage 14 comporte des premières cavités internes 36 et des deuxièmes cavités internes 38 (voir figure 9 par exemple). Les premières cavités internes 36 du système de supportage 14 sont en communication fluidique avec les premières cavités internes 24A, 24B de la pièce 12 et les deuxièmes cavités internes 38 du système de supportage 14 sont en communication fluidique avec les deuxièmes cavités internes 30 de la pièce 12.

Le canal central 34, les premières cavités internes 36 du système de supportage 14, les premières cavités internes 24A, 24B de la pièce 12, le canal principal d'injection d'oxygène 22 et l'entrée d'oxygène 20 forment un premier circuit de circulation de gaz sec, par exemple de l'air comprimé. Le canal central 34, les deuxièmes cavités internes 38 du système de supportage 14, les deuxièmes cavités internes 30 de la pièce 12, le canal principal d'injection d'hydrogène 28 et l'entrée d'hydrogène 26 forment un deuxième circuit de circulation de gaz sec, par exemple de l'air comprimé.

Le premier et le deuxième circuit de circulation de gaz sec est donc configuré pour permettre la circulation de gaz sec entre le système de supportage 14 de la pièce 12 et un orifice débouchant sur une surface extérieure de la pièce 12, respectivement l'entrée d'oxygène 20 et l'entrée d'hydrogène 26 dans le mode de réalisation des figures 1 à 10, en passant par respectivement les premières et deuxièmes cavités internes 24A, 24B, 30 de la pièce 12 et les premières et deuxièmes cavités internes 36, 38 du système de supportage 14.

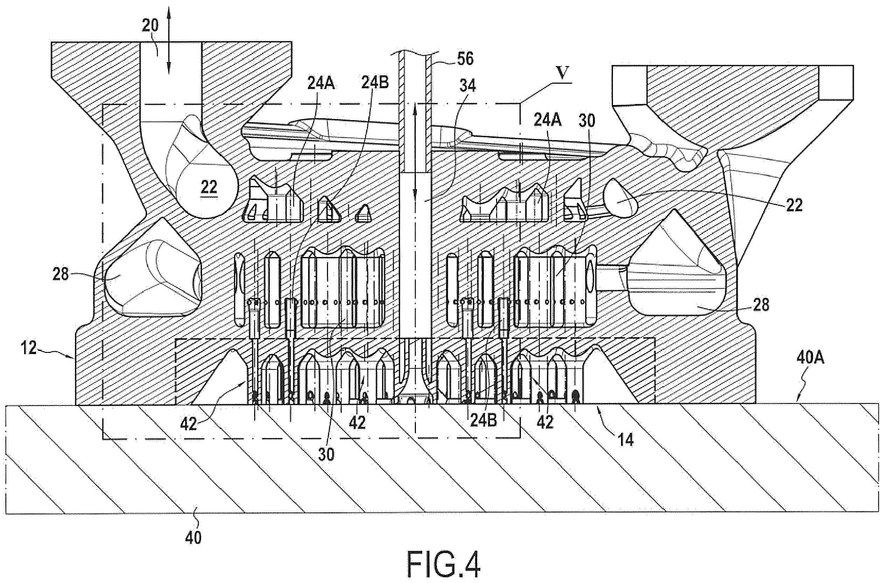

Comme représenté sur les figures 4 à 10, la pièce intermédiaire 10, réalisée par fabrication additive sur lit de poudre, est fabriquée sur une plaque de construction 40. La plaque de construction 40 comprend une surface plane 40A sur laquelle est bâtie la pièce intermédiaire 10 par fusion sélective d'un lit de poudre au moyen d'un faisceau laser.

Dans le mode de réalisation des figures 1 à 10, le système de supportage 14 comporte une pluralité d'éléments de support 42. Chaque élément de support 42 est formé de deux conduits concentriques. Le premier conduit 44 est disposé à l'intérieur du deuxième conduit 46 et la paroi intérieure 46A du deuxième conduit 46 est également la paroi extérieure du premier conduit 44. Le premier conduit 44 est donc distinct du deuxième conduit 46.

Le premier conduit 44 est en communication fluidique avec les premières cavités internes 24A, 24B de la pièce et le deuxième conduit 46 est en communication fluidique avec les deuxièmes cavités internes 30 de la pièce 12. On comprend que les premières cavités internes 36 du système de supportage 14 sont formées par les premiers conduits 44 des éléments de support 42 et que les deuxièmes cavités internes 38 du système de supportage 14 sont formées par les deuxièmes conduits 46 des éléments de support 42.

La pièce intermédiaire 10, en particulier le système de supportage 14 de la pièce 12, délimite avec la plaque de construction 40 une cavité 48 et des conduits de distribution du gaz sec 50 qui relient le canal central 34 et les deuxièmes conduits 46 des éléments de support 42. Les éléments de support 42 comprennent une ouverture 52 permettant une communication fluidique entre la cavité 48 et les premiers conduits 44 des éléments de support 42.

Comme représenté notamment sur la figure 9, la section, dans un plan parallèle à la surface plane 40A de la plaque de construction 40, des premiers et deuxièmes conduits 44, 46 peut varier le long du conduit. Le conduit peut également ne pas être continu dans ce même plan et être formé par des sections, par exemple trois sections annulaires.

Dans le mode de réalisation des figures 1 à 10, le canal central 34 comprend un élément de répartition 54 du gaz sec entre le premier et le deuxième circuit de circulation de gaz sec.

L'élément de répartition 54 permet de répartir le gaz sec vers le circuit d'injection d'oxygène.

Dans le mode de réalisation des figures 1 à 10, l'élément de répartition 54 divise le canal central 34 en deux conduits, un conduit intérieur 54A en communication fluidique avec la cavité 48 grâce à des ouvertures 54C et un conduit extérieur 54B en communication fluidique avec les conduits de distribution du gaz sec 50.

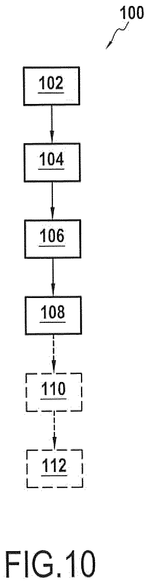

La figure 10 représente un ordinogramme représentant les étapes du procédé 100 de fabrication additive sur lit de poudre de la pièce 12.

Le procédé 100 comprend une première étape de fabrication additive 102 sur lit de poudre de la pièce intermédiaire 10 sur la plaque de construction 40. La pièce intermédiaire comprend la pièce 12 et le système de supportage 14 tel que décrit précédemment. On comprend donc que la pièce 12 et le système de supportage 14 sont réalisés dans un même matériau, c'est-à-dire à partir d'une même poudre. En variante, on peut envisager de réaliser la pièce 12 et le système de supportage 14 dans des matériaux différents, c'est-à-dire utiliser des poudres présentant des compositions chimiques différentes. Les poudres peuvent également présenter des granulométries différentes.

Lorsque la pièce intermédiaire 10 est fabriquée, le procédé 100 comprend une étape de circulation d'un gaz sec 104 entre le système de supportage 14 de la pièce 12 et l'entrée d'oxygène 20 et/ou l'entrée d'hydrogène 26. L'entrée d'oxygène 20 et l'entrée d'hydrogène sont présentes sur une surface extérieure de la pièce 12.

La circulation de gaz sec entre le système de supportage 14 de la pièce 12 et l'entrée d'oxygène 20 et/ou l'entrée d'hydrogène 26 peut être réalisée par injection d'un gaz sec dans la pièce 12 et/ou par aspiration d'un gaz sec dans la pièce 12.

Typiquement, après fabrication de la pièce intermédiaire 10, la poudre résiduelle est aspirée au moyen d'un aspirateur généralement fourni avec le système de fabrication additive sur lit de poudre.

L'aspirateur permet d'aspirer une quantité importante de la poudre présente dans le bac du système de fabrication additive sur lit de poudre et qui n'a pas été fondue au moyen du laser. L'aspirateur permet également d'aspirer par les ouvertures de la pièce intermédiaire 10, la poudre résiduelle présente dans les cavités internes de la pièce intermédiaire 10. Cependant, cet aspiration n'est pas suffisante et ne permet pas de vider complètement les cavités internes de la pièce 10 de la poudre résiduelle qui s'y trouve à la fin de l'étape de fabrication additive 102.

La dépression générée par l'aspirateur peut par exemple être d'environ 200 à 400 mbar (millibar soit environ 20 à 40 kPa (kilopascal)) avec un débit minimum de 50 L/s (litre par seconde).

Dans le mode de réalisation des figures 1 à 9, après avoir aspiré la poudre, on insère un injecteur de gaz sec 56, par exemple un injecteur d'air comprimé, dans le canal central 34 de la pièce intermédiaire 10. L'air comprimé peut par exemple être injecté ou insufflé à une pression de 7 bars (700 kPa). Cette étape est également appelée étape de soufflage.

Le parcours de l'air comprimé dans la pièce intermédiaire 10 est partiellement illustré sur la figure 9.

L'air comprimé circule dans le premier et le deuxième circuit de circulation de gaz sec. L'air comprimé qui entre dans le canal central 34 est dirigé vers le premier et le deuxième circuit de circulation grâce à l'élément de répartition 54.

Une partie de l'air comprimé (flèches en trait plein) est dirigée vers le conduit intérieur 54A de l'élément de répartition 54, passe dans l'ouverture 54C du conduit intérieur 54A et passe dans la cavité 48 avant de pénétrer, à travers l'ouverture 52 des éléments de support 42, dans le premier conduit 44 de chaque élément de support 42. L'air comprimé circule ensuite dans les premières cavités internes 24A, 24B de la pièce 12 puis arrive dans le canal principal d'injection d'oxygène 22 avant de ressortir de la pièce intermédiaire 10 par l'entrée d'oxygène 20. Cette circulation forme la première étape de circulation du gaz sec, dans cet exemple d'air comprimé, dans le premier ensemble de cavités 22, 24A, 24B.

Une autre partie de l'air comprimé (flèches en trait discontinu) est dirigée vers le conduit extérieur 54B de l'élément de répartition 54 et circule dans les conduits de distribution du gaz sec 50 avant de pénétrer dans le deuxième conduit 46 de chaque élément de support 42. L'air comprimé circule ensuite dans les deuxièmes cavités internes 30 de la pièce 12 avant d'arriver dans le canal principal d'injection d'hydrogène 28 et ressortir de la pièce intermédiaire 10 par l'entrée d'hydrogène 26. Cette circulation forme la deuxième étape de circulation du gaz sec, dans cet exemple d'air comprimé, dans le deuxième ensemble de cavités 28, 30.

On comprend donc que la première étape de circulation de gaz sec et la deuxième étape de circulation de gaz sec sont réalisées simultanément.

Lors de sa circulation dans la pièce intermédiaire 10, l'air comprimé chasse la poudre résiduelle qui n'a pas été aspirée hors de cavités internes de la pièce intermédiaire.

On comprend que lors de l'aspiration par le canal central 34, la poudre résiduelle circule dans le sens inverse de celui décrit ci-dessus.

Une fois que l'étape de circulation de gaz sec 104 est terminée, on procède à une étape de séparation 106 de la pièce intermédiaire 10 et de la plaque de construction 40.

La séparation de la pièce intermédiaire 10 et de la plaque de construction 40 peut être réalisée électroérosion par fil, l'électroérosion est aussi appelée « EDM », conformément au sigle anglais pour « Electrical Discharge Machining », dans un milieu liquide, tel que de l'eau ou un dérivé du pétrole.

Une fois la pièce intermédiaire 10 séparée de la plaque de construction 40, on procède à une étape séparation 108 de la pièce 12 et du système de supportage 14. Cette étape de séparation 108 peut par exemple être réalisée par usinage de la pièce intermédiaire afin de retirer le système de supportage 14. L'usinage peut être réalisé par fraisage conventionnel ou tournage. Les parties non massives, c'est-à-dire notamment les éléments de support 42, par défonçage EDM, qui est un procédé similaire à l'électroérosion par fil mais avec une électrode massive.

Lorsque la pièce 12 est séparée du système de supportage 14, la pièce 12 peut subir une étape de traitement thermique 110 afin de réduire les contraintes résiduelles pouvant être présentes dans la pièce 12. L'étape de traitement thermique, qui peut dépendre du matériau utilisé peut par exemple être réalisée à une température comprise entre 700°C et 1200°C et pendant un temps compris entre 15 minutes et plusieurs heures.

Par ailleurs, l'étape de traitement thermique 110 peut être réalisée entre l'étape 104 et l'étape 106 ou entre l'étape 106 et l'étape 108. Lorsque l'étape de traitement thermique de la pièce 12 est réalisée entre l'étape 104 et l'étape 106, on traite thermiquement la pièce intermédiaire 10 et la plaque de construction 40, c'est-à-dire la pièce 12, le système de supportage 14 et la plaque de construction 40. Lorsque l'étape de traitement thermique de la pièce 12 est réalisée entre l'étape 106 et l'étape 108, on traite thermiquement la pièce intermédiaire 10, c'est-à-dire la pièce 12 et le système de supportage 14.

La pièce 12 peut également subir une étape de frittage 112 de la pièce 12 pour obtenir une pièce frittée qui peut ensuite être usinée.

La pièce 12 peut être par exemple traitée par compression isostatique à chaud, appelée HIP conformément au sigle anglais pour « Hot Isostatic Pressing » qui consiste à mettre la pièce dans une enceinte sous pression, par exemple, à environ 1000 bar à environ 1000°C, en fonction du matériau.

Par exemple, la poudre utilisée pour la fabrication additive peut comprendre du titane ou être en alliage métallique communément désigné par la marque déposée Inconel™. On parle par la suite d'Inconel pour désigner un alliage à base de fer alliés avec du nickel et du chrome. La granulométrie de la poudre est adaptée au procédé de fabrication additive sur lit de poudre et présente une granulométrie généralement inférieure ou égale à 70 µm.

Dans ce qui suit, les éléments communs aux différents modes de réalisation sont identifiés par les mêmes références numériques.

De manière alternative, le canal central 34 pourrait ne pas comprendre l'élément de répartition 54. La première étape de circulation de gaz sec et la deuxième étape de circulation de gaz sec peuvent être réalisées simultanément.

On peut également envisager que la première étape de circulation de gaz sec et la deuxième étape de circulation de gaz sec soient réalisées l'une après l'autre. En particulier, lorsque le canal central 34 pourrait ne pas comprendre l'élément de répartition 54, l'injecteur de gaz sec 56 peut prendre deux configurations, une première configuration dans laquelle le gaz sec circule dans le premier conduit 44 de circulation de gaz sec et une deuxième configuration dans laquelle le gaz sec circule dans le deuxième conduit 46 de circulation de gaz sec. L'injecteur de gaz sec pourrait ainsi passer de la première configuration, dans laquelle seules des ouvertures du canal central communiquant avec la cavité 48 seraient alimentées en gaz sec à la deuxième configuration, dans laquelle seules des ouvertures du canal central communiquant avec les conduits de distribution du gaz sec 50 seraient alimentées en gaz sec.

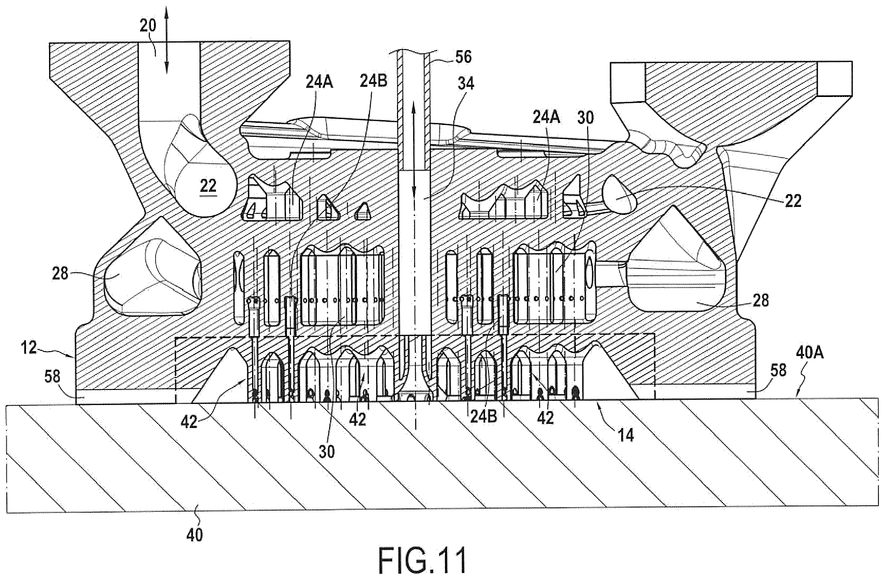

La figure 11 représente une alternative du premier mode de réalisation dans laquelle le système de supportage 14 comprend une pluralité de canaux latéraux 58 de gaz sec dans la cavité 48.

Quoique le présent exposé ait été décrit en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

Dans le mode de réalisation des figures 1 à 10, chaque élément de support 42 comprend un premier conduit 44 de circulation de gaz sec dans le premier ensemble de cavités 22, 24A, 24B et un deuxième conduit 46 de circulation de gaz sec dans le deuxième ensemble de cavités 28, 30. Cependant, on pourrait envisager que certains éléments de support 42 ne comprennent qu'un seul conduit ou soient dépourvus de conduit. On peut également envisager de changer la poudre au fur et à mesure des couches de la pièce intermédiaire 10 formée, c'est-à-dire la composition chimique de la poudre et/ou sa granulométrie.

## Revendications

1. Pièce intermédiaire (10) obtenue par un procédé de fabrication additive sur lit de poudre, comprenant une pièce (12) comportant au moins une cavité interne (22, 24A, 24B, 28, 30) et un système de supportage (14) de la pièce (12) comportant au moins une cavité interne (36, 38), la pièce intermédiaire (10) comprenant au moins un circuit de circulation d'un gaz sec, le circuit de circulation du gaz sec étant configuré pour permettre la circulation du gaz sec entre le système de supportage (14) de la pièce et un orifice débouchant (20, 26) sur une surface extérieure de la pièce (12) en passant par la cavité interne (22, 24A, 24B, 28, 30) de la pièce (12) et la cavité interne (36, 38) du système de supportage (14) et dans laquelle la pièce (12) comprend un premier ensemble de cavités (22, 24A, 24B) communiquant entre elles et un deuxième ensemble de cavités (28, 30) communiquant entre elles, le système de supportage (14) de la pièce comprenant une pluralité d'éléments de support (42), des éléments de support (42) comprenant un premier conduit (44) de circulation de gaz sec dans le premier ensemble de cavités (22, 24A, 24B) et un deuxième conduit (46) de circulation de gaz sec dans le deuxième ensemble de cavités (28, 30).

2. Pièce intermédiaire (10) selon la revendication 1, dans laquelle chaque élément de support (42) comprend un premier conduit (44) de circulation de gaz sec dans le premier ensemble de cavités (22, 24A, 24B) et un deuxième conduit (46) de circulation de gaz sec dans le deuxième ensemble de cavités (28, 30).

3. Pièce intermédiaire (10) selon la revendication 2, dans laquelle le premier conduit (44) de circulation de gaz sec et le deuxième conduit (46) de circulation de gaz sec sont distincts.

4. Pièce intermédiaire (10) selon la revendication 3, dans laquelle le premier conduit (44) de circulation de gaz sec et le deuxième conduit (46) de circulation de gaz sec sont concentriques.

5. Ensemble d'une pièce intermédiaire (10) selon l'une quelconque des revendications 1 à 4, d'une plaque de construction (40) et d'un injecteur de gaz sec (56) configuré pour injecter un gaz sec dans la cavité interne (22, 24A, 24B, 28, 30, 36, 38).

6. Ensemble selon la revendication 5, la pièce intermédiaire (10) étant selon les revendications 1 à 4 et l'injecteur de gaz sec (56) étant configuré pour injecter le gaz sec dans le premier conduit (44) de circulation de gaz sec et dans le deuxième conduit (46) de circulation de gaz sec.

7. Ensemble selon la revendication 6, dans lequel I'injecteur de gaz sec (56) peut prendre deux configurations, une première configuration dans laquelle le gaz sec circule dans le premier conduit (44) de circulation de gaz sec et une deuxième configuration dans laquelle le gaz sec circule dans le deuxième conduit (46) de circulation de gaz sec.

8. Procédé de fabrication additive sur lit de poudre d'une pièce (12) comprenant au moins une cavité interne (22, 24A, 24B, 28, 30), le procédé comprenant les étapes suivantes :
- fabrication additive sur lit de poudre d'une pièce intermédiaire (10) sur une plaque de construction (40), la pièce intermédiaire (10) comprenant une pièce (12) comportant au moins une cavité interne (22, 24A, 24B, 28, 30) et un système de supportage (14) de la pièce (12) comportant au moins une cavité interne (36, 38), la pièce intermédiaire (10) comprenant au moins un circuit de circulation d'un gaz sec ;
- circulation d'un gaz sec entre le système de supportage (14) de la pièce et un orifice débouchant (20, 26) sur une surface extérieure de la pièce (12) en passant par la cavité interne (22, 24A, 24B, 28, 30) de la pièce (12) et la cavité interne (36, 38) du système de supportage (14) ;
- séparation de la pièce intermédiaire (10) et de la plaque de construction (40) ;
- séparation de la pièce (12) et du système de supportage (14) dans lequel la pièce (12) comprend un premier ensemble de cavités (22, 24A, 24B) et un deuxième ensemble de cavités (28, 30), le système de supportage (14) de la pièce comprenant une pluralité d'éléments de support (42), des éléments de support (42) comprenant un premier conduit (44) de circulation de gaz sec dans le premier ensemble de cavités (22, 24A, 24B) et un deuxième conduit (44) de circulation de gaz sec dans le deuxième ensemble de cavités (28, 30), le procédé comprenant une première étape de circulation de gaz sec dans le premier ensemble de cavités (22, 24A, 24B) et une deuxième étape de circulation de gaz sec dans le deuxième ensemble de cavités (28, 30).

9. Procédé selon la revendication 8, dans lequel la première étape de circulation de gaz sec et la deuxième étape de circulation de gaz sec sont réalisées l'une après l'autre.

10. Procédé selon la revendication 9, dans lequel la première étape de circulation de gaz sec et la deuxième étape de circulation gaz sec sont réalisées simultanément.
